# FASCICULE DE BREVET EUROPEEN

(11) **EP 2 598 417 B1**
(45) Date de publication et mention de la délivrance du brevet: **04.03.2015**
(21) Numéro de dépôt: 11752264.9
(22) Date de dépôt: 21.07.2011
(51) Int. Cl.: B65D 85/804

(54) **DOSETTE DE CAFE A ENVELOPPE FLEXIBLE MICROPOREUSE OU MICROPERFOREE**
KAFFEEPAD MIT FLEXIBLEM MIKROPORÖSEM ODER MIKROPERFORIERTEM GEHÄUSE
COFFEE POD HAVING A FLEXIBLE MICROPOROUS OR MICROPERFORATED CASING

(30) Priorité: 28.07.2010 FR 1056208
(43) Date de publication de la demande: 05.06.2013
(73) Titulaire: Ferrier, Frédéric, 06340 Cantaron (FR); Luciani, André, 13007 Marseille (FR)
(72) Inventeur: Ferrier, Frédéric, 06340 Cantaron (FR); Luciani, André, 13007 Marseille (FR)
(74) Mandataire: Domange, Maxime
(86) Numéro de dépôt international: PCT/FR2011/051761
(87) Numéro de publication internationale: WO 2012/022878

(56) Documents cités:
- FR-A1- 2 879 175
- FR-A1- 2 908 970

## Description

La présente invention concerne une dosette pour la production de boissons à base de café par infusion de café moulu, notamment des boissons de type "espresso", ainsi qu'un procédé de fabrication d'une boisson à partir d'une telle dosette dans une machine à café sous pression.

Des domaines d'applications privilégiés de la présente invention seront ceux de la production de cafés moulus et de leur conditionnement, ainsi que de la préparation de boissons à base de café à partir de quantités déterminées de café(s) moulu(s) conditionnées sous forme de dosettes.

Un nombre important de telles dosettes a été décrit dans la littérature.

Ce type de dosettes est utilisé pour fabriquer des boissons à base de café dans des machines à café sous pression, en insérant la dosette dans une chambre d'extraction, au sein de laquelle ladite dosette est le cas échéant décompactée avant d'être infusée par un liquide chaud, notamment de l'eau chaude, le décompactage visant à faciliter le passage de l'eau et la libération et solubilisation des arômes du café pour en extraire lesdits arômes. Le décompactage, avant passage de l'eau pour l'extraction, permet d'assurer que la totalité de l'agrégat de café soit mouillée afin d'éviter une extraction incomplète.

On connaît des dosettes de café moulu compacté sans enveloppe. L'absence d'enveloppe est avantageuse économiquement mais se traduit par un effritement de la matière en surface de la dosette lors de son stockage ou de sa manipulation. En outre, lors de la mise en oeuvre de la dosette dans la machine à café, se pose le problème des dépôts résiduels de marc de café dans ladite chambre d'extraction, ce qui nécessite une opération supplémentaire de nettoyage de la chambre d'extraction et, éventuellement, des filtres au niveau de la sortie du liquide de la chambre d'extraction, ceci afin d'éviter les risques de prolifération de moisissures, de bouchage des filtres en sortie de la chambre d'extraction et risques de disfonctionnement et/ou de dégradation de la machine à café ou, encore, la mauvaise qualité d'une boisson au café préparée avec une dosette subséquente introduite dans une chambre d'extraction non nettoyée.

On a décrit dans FR 2 879 175, des dosettes de café moulu compacté revêtues d'une enveloppe emprisonnant et épousant la forme d'un agrégat de café compacté, constituée d'une feuille ou d'un film de matériau poreux, filtrant, donc perméable. Cette enveloppe présente l'avantage de prévenir tout effritement de l'agrégat de café moulu compacté avant son introduction dans la chambre d'extraction de la machine, sans diminuer leur capacité à la rupture ou l'écrasement sous l'effort du piston de la machine à café, ni empêcher l'infusion et l'extraction des arômes du café pour la préparation d'une boisson. Toutefois, dans ce brevet, on cherche à favoriser l'explosion de ladite enveloppe en plusieurs fragments dans la chambre d'extraction de la machine à café sous la pression du piston, de façon à améliorer l'homogénéité de l'infusion et de l'extraction des composants du café moulu contenus dans la dosette. Pour ce faire, on met en oeuvre un matériau tissé ou non tissé à base de fibres, présentant un faible grammage entre 15 et 20 g/m² et présentant, de préférence, des zones de fragilité, de plus faible épaisseur et/ou de plus grande perforation ou porosité. En pratique, dans ce brevet, on met en oeuvre un papier filtre à usage alimentaire ou une enveloppe constituée d'un film à base de fibres de nylon tissées. Ces enveloppes sont donc des enveloppes déchirables ne présentant pas d'élasticité suffisante pour supporter, d'une part, la déformation résultant du décompactage et d'autre part, l'augmentation de volume de la dosette après son humidification pour l'extraction des arômes du café par infusion de la dosette à l'aide d'un liquide chaud.

Cependant, ce type de dosettes à enveloppe filtrante déchirable présente toujours les mêmes inconvénients que les dosettes sans enveloppe au regard de la nécessité de mettre en oeuvre un nettoyage de la chambre d'extraction, laquelle comporte le marc de café mélangé aux fragments d'enveloppe déchirée de ladite dosette qu'il y a lieu d'évacuer de la chambre d'extraction vers un compartiment de stockage, pour permettre la préparation d'une nouvelle boisson dans la machine. Le papier filtre ou le film nylon micro-perforé n'étant pas élastiquement déformable, ce matériau se déchire, occasionnant des dépôts de mouture dans la chambre d'extraction, ainsi que sur les filtres.

On connaît dans FR 2 908 970 et WO 2008/071878, une capsule rigide ou semi-rigide, étanche, apte à être percée pour permettre l'injection d'eau sous pression à l'intérieur de ladite capsule, à travers lesdites perforations, et permettre l'infusion de la substance, notamment le café emprisonné dans ladite capsule, puis la récupération d'une boisson aromatisée s'écoulant à travers lesdites perforations. L'enveloppe de conditionnement est initialement entièrement étanche à l'air et à l'eau et on récupère la dosette avec son enveloppe perforée contenant la motte de marc de café humidifiée résiduelle, après écoulement du liquide à travers ladite enveloppe. Ce type de capsules requiert la mise en oeuvre d'une machine à café équipée d'un dispositif de perçage par aiguilles et est inutilisable dans les machines à café non équipée d'un dispositif de perçage de l'enveloppe de la capsule. Il y a lieu de relever que le dispositif de perçage par aiguilles est, lui aussi, peu hygiénique et susceptible de se boucher et difficile à nettoyer.

De surcroît, dans le brevet WO 2008/071878, lorsque la capsule comprend un agrégat compacté de café, le dispositif de perçage de l'enveloppe ne réalise pas le décompactage, l'agrégat du café restant compacté lors de l'extraction, ce qui ne permet pas une extraction complète ou, à tout le moins, optimale des arômes de café lors de l'injection d'eau au sein de ladite enveloppe.

Le but de la présente invention est de fournir un nouveau type de dosette amélioré permettant de surmonter les inconvénients des réalisations antérieures, telles que mentionnées ci-dessus.

Plus particulièrement, un but de l'invention est de fournir un nouveau type de dosettes qui ne requière pas une machine à café spécialement conçue pour fabriquer une boisson à base de café à l'aide de ladite dosette, et qui combine les propriétés avantageuses de protection de l'agrégat de café lors de son stockage et en cours d'utilisation, et qui requière un nettoyage simple et facile à réaliser de la machine dans laquelle la dosette est mise en oeuvre pour la fabrication d'une boisson à base de café.

Plus particulièrement, un but de la présente invention est de fournir une dosette de café moulu "universelle", c'est à dire qui permette la préparation de cafés boisson à base de café à l'aide de machines à café sous pression de type "tout-automatique" décrites dans FR 2 879 175.

La présente invention concerne plus particulièrement une dosette de café moulu adaptée pour la préparation de cafés et boissons à base de café à l'aide de machines "tout-automatique" du type décrit dans les demandes de brevets européens EP-A-0 948 927 et EP-A-0 948 926, représenté schématiquement aux figures 1 et 2 annexées à la présente demande, ou dans le document WO-A-01/91620, et comportant un "groupe" d'extraction comprenant une chambre d'infusion dans laquelle une quantité de café moulu est déversée, puis tassée par au moins un piston mobile dans ladite chambre d'infusion, ledit piston étant relié à la chaudière de la machine et comportant des moyens d'injection d'eau chaude au travers du café moulu après tassement dans la chambre pour en extraire les arômes.

Un autre but de la présente invention est de fournir une dosette de café moulu pour des machines du type précité qui puisse être produite industriellement à un faible coût.

Un autre but de l'invention est enfin de fournir une dosette de café qui puisse être utilisée dans lesdites machines sans intervention manuelle de l'utilisateur pour mettre ladite dosette en place dans la machine, et qui puisse à l'inverse être stockée dans un réservoir solidaire ou indépendant de ladite machine et insérée automatiquement depuis ce dit réservoir dans le groupe d'extraction de ladite machine pour la préparation d'un café puis évacué automatiquement de celui après infusion du café contenu dans ladite dosette.

Pour ce faire, la présente invention fournit une dosette de café utile notamment pour des machines de préparation et de distribution de boissons à base de café du type comportant au moins une chambre d'extraction, et au moins un piston de tassement d'une quantité déterminée de café moulu introduite dans ladite chambre d'extraction, ladite dosette comprenant :
- une quantité déterminée de café moulu compactée sous forme d'un agrégat de grains de café moulu, présentant une forme externe adaptée au roulement, et de préférence une forme de boule sensiblement sphérique, et
- une enveloppe filtrante constituée d'au moins une feuille ou un film perméable microporeux ou microperforé, emprisonnant et épousant la forme dudit agrégat de café compacté,
caractérisée en ce que ladite feuille ou ledit film est flexible, présentant des propriétés d'étirabilité avec un allongement à la rupture d'au moins 30%, avec une force de traction à la rupture inférieure à 2 000 N/m, et une épaisseur d'au moins 150 µm, de préférence de 150 à 500 µm.

La dosette selon l'invention est avantageuse en ce que son enveloppe remplit les fonctions de protection lors du stockage et lors de la manipulation de la dosette avant utilisation, la fonction de décompactage et filtration des grains de café moulu sous l'effet de la pression du piston de la machine à café, permettant l'infusion et l'extraction des arômes du café pour la préparation d'une boisson en retenant en son sein les particules de café moulu après infusion, de par la structure micro-perforée ou microporeuse de l'enveloppe.

Enfin, de par sa solidité et ses propriétés d'étirabilité, une telle enveloppe présente l'avantage de permettre le décompactage de l'agrégat de café qu'elle contient, en changeant de forme et en augmentant de volume, sans se déchirer.

Une telle enveloppe permet en effet de décompacter ladite dosette en changeant la forme de la dosette par compression et en autorisant le gonflement de la dosette humide après injection d'eau sous pression à travers l'enveloppe sans que l'enveloppe ne se déchire et, donc, sans répandre la mouture sur les filtres d'entrée d'eau chaude et de sortie de café de la chambre d'extraction de l'appareil d'extraction.

De par son élasticité, une telle enveloppe reste moulée contre la dosette de café moulu compacté initialement et permet ainsi de mieux maintenir la forme initiale, notamment la forme sphérique initiale, de ladite dosette lors de son stockage ou de sa manipulation.

Une telle dosette permet également de faciliter l'éjection de la motte tassée, décompactée et gonflée après infusion, en dehors de la chambre d'extraction. Ainsi, la chambre d'extraction reste toujours propre, sans résidu de mouture de café, ce qui évite la prolifération de bactéries et l'obstruction des filtres, lesquels peuvent entrainer des dysfonctionnements du système d'extraction.

Enfin, l'absence de résidu dans l'appareil d'extraction, dû aux utilisations antérieures, permet de surcroît de garantir une qualité plus homogène ou plus régulière de l'extraction des arômes du café et du goût, et permet enfin d'augmenter la longévité mécanique du dispositif d'extraction.

L'épaisseur de l'enveloppe et ses propriétés d'allongement d'au moins 30% permettent, sans risque de rupture de l'enveloppe, même lorsque celle-ci est constituée de deux parties de feuille ou film thermosoudées entre elles pour former un volume, de ne pas se déchirer au niveau de la soudure, ou ailleurs, lorsque l'agrégat de café est décompacté, et que l'enveloppe se déforme sous pression d'un piston dans la chambre d'extraction d'une machine à café et, surtout, permettent à l'enveloppe de continuer à épouser la surface de la motte de dosette de mouture de café après injection de liquide chaud pressurisé dans le café moulu désagrégé, et que le volume de la dosette augmente jusqu'à 30% selon les conditions d'utilisation de ladite machine à café.

Les micropores ou microperforations sont de taille et densité appropriées pour laisser s'écouler le liquide aromatisé et retenir les grains de mouture ou marc de café résiduels au sein de ladite enveloppe.

Plus particulièrement, les micropores ou microperforations de ladite feuille ou dit film de l'enveloppe sont inférieurs à la taille des particules de café moulu constituant ledit agrégat et ont une taille moyenne inférieure à 0,3 mm, de préférence de 100 à 300 µm, pour retenir les particules de marc de café, ceux-ci étant en général d'une taille moyenne de 300 à 500 µm.

Les paramètres d'allongement et de résistance à la traction sont mesurés en étirant la feuille ou le film à l'aide d'un dynamomètre et en mesurant l'allongement nécessaire à sa rupture selon la norme NF EN 1940 (indice X41-025) et la force de la traction nécessaire à sa rupture selon la norme NF EN 1941 (indice X41-021) ou la méthode Inst/MC 203.

Ladite enveloppe ne comporte donc pas de zone de fragilité sous forme d'épaisseur réduite ou de perforations additionnelles, sous forme notamment d'épaisseur réduite localisée ou de perforations additionnelles. Ladite enveloppe est apte à résister à la rupture sous un effort de compression au moins égal à la pression appliquée par un piston de tassement à l'intérieur de la chambre d'extraction d'une machine à café, à savoir une pression de 500 à 1500 kPa, plus particulièrement de 700 à 1200 kPa.

Dans un mode préféré de réalisation, ladite enveloppe présente un grammage compris entre 20 et 50 g/m².

Ladite enveloppe peut être constituée d'un matériau naturel biodégradable ou synthétique biodégradable, coulé ou tissé ou non tissé comprenant, dans ce dernier cas, des fibres tissées ou enchevêtrées.

Dans une première variante de réalisation, ladite enveloppe est constituée d'un matériau non tissé à base de fibres synthétiques enchevêtrées, lesdits micropores de surface présentant une plus grande dimension de 0,15 à 0,30 mm, de préférence présentant une perméabilité à l'air de 3000 à 6000 l/m²/s dans un test selon la méthode EDANA 140.2-99/WSP 70.1 (méthode utilisée par l'Association européenne EDANA des fabricants de non-tissé) ou encore un test selon la méthode Inst/MC 227 (test utilisé par d'autres fabricants de non-tissé).

Le test de perméabilité à l'air consiste à mesurer le débit d'air traversant une surface donnée de feuille de matériau non tissé pour une perte de charge définie entre entrée et sortie d'air, notamment une perte de charge de 100 Pa pour une surface de 20 cm².

Plus particulièrement, le matériau non tissé présentera également une perméabilité à l'eau de 500 à 1500 l/m2/s dans un test selon la norme Inst/MC 336, consistant à positionner une colonne d'eau au-dessus d'une surface de 20 mm de diamètre de dit matériau non tissé et mesurer le temps pour que s'écoule une quantité donnée de liquide à travers ladite surface.

Dans une autre variante de réalisation, ladite enveloppe est constituée d'un film de matière plastique synthétique microperforé, lesdites microperforations présentant une plus grande dimension de 0,15 à 0,30 mm et ledit film présentant une densité surfacique de perforations de 50 à 250 perforations/cm².

On comprend que le matériau constitutif de la feuille ou dudit film est un matériau non soluble dans l'eau et présente des qualités alimentaires, c'est-à-dire acceptable pour le conditionnement des compositions et produits alimentaires.

Plus particulièrement, le ou les matériaux constitutifs de ladite enveloppe sont choisis parmi le polyéthylène, de préférence du type PEHD, polypropylène et polyester.

Plus particulièrement encore, ladite enveloppe est constituée d'un matériau non tissé à base de fibres de polyester revêtues de polyéthylène.

Cette fibre bicomposant est avantageuse du fait que le polyéthylène a une température de fusion de 150°C, inférieure à celle du polyester de 182°C, lors du traitement thermique de thermo-soudage pour la constitution de ladite enveloppe, tel que décrit ci-après, seul le polyéthylène fond, assurant ainsi la fonction de liant entre les fibres enchevêtrées et entre deux parties d'enveloppe ou deux demies enveloppes.

Plus particulièrement encore, ladite enveloppe est constituée d'un film de polyéthylène ou polypropylène.

Selon une autre caractéristique particulière, ladite enveloppe comporte deux demi-enveloppes, de préférence symétriques, de préférence encore hémisphériques, scellées l'une à l'autre, de préférence par thermo-soudage, le long d'au moins une ligne de jonction continue et périphérique à la dosette, le matériau constitutif de ladite enveloppe présentant une température de fusion supérieure à 100°C.

On comprend que la température de fusion supérieure à 100°C permet que le matériau ne soit pas dégradé lors de l'injection de liquide chaud pressurisé, lors de la préparation d'une boisson, à partie de ladite dosette dans une machine à café.

Plus particulièrement encore, ladite quantité de café compactée est de 5 à 15 g, de préférence de 5 à 8 g, et la densité du café moulu compacté constituant ledit agrégat compactée, est de 0,65 à 0,75 kg/dm³, de préférence de 0,68 à 0,72 kg/dm³.

Une telle quantité de café correspond à la quantité de café moyenne nécessaire à la préparation d'un café de type "expresso" à l'aide d'une machine à café toute automatique, semi-automatique ou manuelle.

Les valeurs de densité correspondent aussi aux valeurs limites de densité et de diamètre pour lesquelles des résultats satisfaisants, c'est-à-dire au moins aussi bons qu'avec du café moulu non tassé, ont été obtenus pour la préparation de boisson avec des machines toute automatique, semi-automatique ou manuelle, en termes de gout des boissons préparées et de fonctionnement de la machine.

De préférence, la dosette présente une forme externe adaptée au roulement, et de préférence une forme comprenant au moins une position arrondie, de préférence encore une forme de boule sensiblement sphérique, ce qui en facilite de décompactage.

Plus particulièrement encore, ladite dosette est de forme sensiblement sphérique, cylindrique ou ovoïde, de préférence sphérique et sa dimension maximale est de 20 à 40 mm, de préférence avec un diamètre de 24 à 34 mm pour une dosette sphérique, de préférence encore de 26 à 30 mm de diamètre de dosette sphérique.

La présente invention fournit également un procédé de préparation d'une boisson à base de café à l'aide d'une dosette selon l'invention, dans une machine à café comportant une chambre d'extraction apte à recevoir une dite dosette et au moins un piston de compression et un piston d'éjection d'une dite dosette à l'intérieur de ladite chambre d'extraction, caractérisé en ce que l'on réalise les étapes successives suivantes, dans lesquelles :
1/ on introduit ladite dosette dans ladite chambre d'extraction d'une machine à café, et
2/ on comprime, de préférence à une pression de 500 à 1500 kPa, ladite dosette à l'intérieur de ladite chambre d'extraction à l'aide dudit piston de compression, jusqu'à écrasement et déformation de ladite dosette et décompactage dudit agrégat de café moulu compacté, contenu dans ladite enveloppe, et sans rupture de ladite enveloppe, et
3/ on injecte une quantité d'eau déterminée de liquide chaud pressurisée à une pression de 2 à 20 bars (200 KPa à 2 MPa), de préférence de l'eau à la température de 85 à 100°C, de préférence de 86 à 96°C, au travers de ladite dosette décompactée, et
4/ on récupère, dans un récipient approprié, une boisson contenant les arômes de café solubilisé dans ledit liquide chaud, extraits sous pression à travers ladite dosette à l'étape 2/, et
5/ on évacue ladite dosette humide, à l'aide dudit piston d'éjection, la motte de marc de café humidifiée résiduelle, de forme différente de ladite dosette initiale et de plus grand volume que ladite dosette initiale, hors de ladite chambre d'extraction.

Plus particulièrement, on met en oeuvre une chambre d'extraction de forme cylindrique à section circulaire, de diamètre légèrement supérieur au diamètre d'une dosette sphérique, et, à l'étape 2/, on obtient une déformation de ladite dosette de forme sensiblement cylindrique. Et, à l'étape 3/, l'accroissement de volume de ladite dosette, déformée suite à l'injection de liquide chaud, sans rupture de ladite enveloppe, est rendu possible par les propriétés d'allongement, de solidité de ladite enveloppe.

A l'étape 2/, la pression de décompactage est en général de 700 à 1 200 kPa, correspondant à une force de 50 à 100 kg exercée sur une surface circulaire, correspondant à la section transversale d'une chambre d'extraction de diamètre de 30 à 40 mm. Il y a lieu de noter que la pression d'appui sur la dosette doit être suffisante pour réaliser le décompactage mais ne doit pas être excessive, de façon à ne pas recompacter la dosette à une densité plus importante, ce qui nuirait à une bonne extraction du café lors du passage de l'eau.

A l'étape 3/, on met en oeuvre un liquide chaud à une température de 86 à 96°C pour obtenir une extraction optimale des arômes du café, c'est-à-dire dans des conditions de rendement d'extraction maximales sans dégrader lesdits arômes. La quantité de liquide injecté peut varier en fonction de la concentration en arômes de café de la boisson que l'on cherche à obtenir.

L'action de décompacter à l'étape 2/ est importante, car une dose non décompactée ne peut pas pleinement libérer ses arômes par extraction par injection d'eau sous pression selon l'étape 3/.

De façon complémentaire à ce qui vient d'être décrit, la présente invention a également pour objet un procédé de préparation d'une dosette de café conforme à l'invention selon lequel dans une première étape, on prépare une quantité déterminée de café moulu non tassé, puis dans une deuxième étape, on compacte ladite quantité de café moulu pour former un agrégat solide de café de forme de préférence arrondie, adaptée au roulement.

Ensuite, dans une troisième étape, on recouvre et on emprisonne ledit agrégat de café solide à l'aide d'une enveloppe épousant la forme dudit agrégat, ladite enveloppe étant de préférence constituée de deux demi-enveloppes d'un matériau souple scellées l'une à l'autre.

De façon avantageuse, lors de la seconde étape, on compacte le café moulu entre deux empreintes d'un moule, de préférence symétriques, jusqu'à obtenir la densité de café recherchée, de préférence comprise entre 0,65 et 0,75 kg/dm3, de préférence encore comprise entre 0,68 et 0,72 kg/dm3.

Lorsque ladite enveloppe recouvrant l'agrégat de café est formée par deux demi-enveloppes, celles-ci sont de préférence scellées l'une à l'autre par thermo-soudage le long d'une dite ligne de jonction.

Afin d'améliorer la productivité du procédé, il est possible de réaliser lesdites deuxième et troisième étapes de celui-ci simultanément.

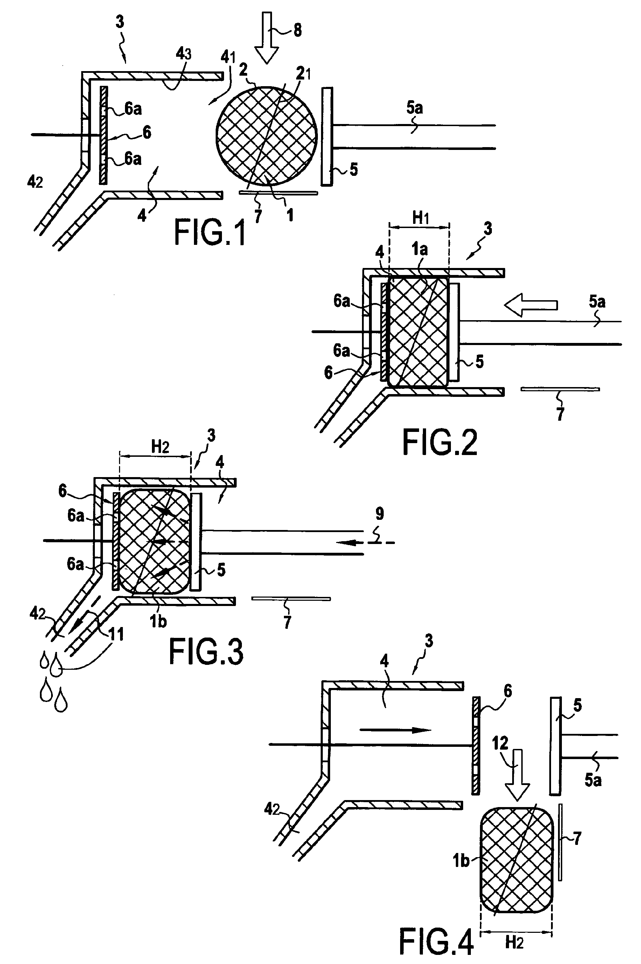

D'autres caractéristiques et avantages de la présente invention apparaitront à la lumière de la description qui est faite en référence aux figures 1 à 4 qui illustre de façon schématique les différentes étapes d'un procédé de fabrication de boissons à base de café à l'aide d'une dosette selon l'invention, dans lesquelles :
- la figure 1 illustre l'étape d'introduction de la dosette dans une chambre d'extraction de machine à café sous pression,
- la figure 2 illustre l'étape de décompactage par compression de la dosette à l'aide d'un piston, au sein de la chambre d'extraction,
- la figure 3 illustre l'étape d'injection d'eau chaude dans la dosette tassée et percolation, et
- la figure 4 illustre l'étape d'éjection de la motte de marc de café après percolation.

### Exemple 1 :

On a réalisé un agrégat de café moulu de forme sphérique, de diamètre d'environ 28 mm et de poids 7 g, à une densité d'environ 0,7 kg/dm³, selon un procédé connu de l'homme de l'art décrit notamment dans FR 2 875 917.

On a réalisé une enveloppe destiné à recouvrir ladite dosette sphérique de café compacté à partir d'un film de fibres non tissées bicomposant, commercialisé par la société PGI (Polymer Group Inc.)/NORDLYS (France - 59270 Bailleul) sous la référence PACKLINE 3500, comportant une âme de polyester PET recouverte de polyéthylène, ce film présentant un grammage de 35 g/m² et une épaisseur de 370 µm, de taille moyenne de ses pores de 65 µm dans une fourchette de dimension de pores de 20 µm à 316 µm, présentant une perméabilité à à l'air (encore appelée « porosité à l'air ») de 4 500 l/m²/s dans un test selon la méthode de référence Inst/MC 227 (test aussi utilisé par le fabricant et d'autres fabricants de non-tissé).

Ce film présentait les propriétés mécaniques d'allongement à la rupture de 45% (sens machine) et 80% (perpendiculaire au sens machine) et une résistance à la rupture de 90 N/5 cm, soit 1 800 N/m (sens machine) et 40 N/5 cm, soit 800 N/m (perpendiculaire au sens machine) calculé selon les normes NF EN 1940 et 1941 mentionnées ci-dessus.

L'enveloppe a été formée par thermoscellage de deux demi-enveloppes hémisphériques en recouvrant une boule de café compacté de deux demi-enveloppes et thermo-soudage au niveau de leur zone de jonction circulaire équatoriale 2₁, comme décrit dans le brevet FR 2 875 917.

### Exemple 2 :

On a préparé une boisson à base de café à l'aide d'une machine à café, telle que décrite dans FR 2 879 175 du type de celle décrit dans EP 948926, et illustrée schématiquement dans les figures 1 à 4. Cette machine comprend essentiellement un groupe d'extraction comprenant une chambre d'extraction et d'infusion 4, constituée d'un cylindre ouvert à une extrémité 4₁ et depuis le fond duquel s'étend une canule 4₂. A l'intérieur de ladite chambre est positionné un dispositif de filtration comprenant un plateau de support 6, sur lequel repose une grille perforée (non représentée) permettant le passage de liquide mais retenant les particules éventuelles de café moulu. Le plateau support 6 comporte, sur sa périphérie, un joint d'étanchéité (non représenté) en contact avec les parois latérales 4₃ de la chambre 4 et le plateau 6, ainsi qu'au moins une ouverture 6a permettant l'écoulement du café liquide depuis l'intérieur de la chambre 4 vers la canule 4₂.

Cette canule 4₂ permet l'évacuation du café liquide infusé à l'intérieur de la chambre 4 vers l'extérieur de celle-ci et sa distribution dans un récipient adapté (non représenté), disposé à l'extérieur de la machine sous l'extrémité de la canule 4₂.

L'ouverture 4₁ de la chambre 4 est positionnée en communication avec un réservoir de dosettes de café (non représenté). Sous une action de commande d'un utilisateur, une dosette 1 est déversée 8 depuis le réservoir vers l'intérieur de la chambre 4. Un piston 5, relié à une chaudière de la machine par un conduit 5a et comportant au travers de sa face d'appui des orifices de diffusion d'eau depuis le conduit 5a, permet de réaliser une compression sur la dosette 1 pour en réaliser le décompactage, comme représenté sur la figure 2. Ce piston 5 présente un diamètre sensiblement égal au diamètre interne de la chambre 4 et comporte, sur sa périphérie, un joint (non représenté) adapté pour réaliser l'étanchéité entre la paroi cylindrique de la chambre 4 et le piston 5 lors de la préparation d'un café et, ainsi, éviter les projections hors de la chambre 4 lors de l'injection d'eau chaude sous pression, à une température d'environ 90°C, dans le café Une fois que le piston 5 a été actionné en translation à l'intérieur de la chambre 4 pour venir tasser la dose 1 et décompacter avec une force de compression entre 50 et 100 kg le café moulu qu'elle contient. A ce stade, la dosette décompactée/tassée est toujours à sec et présente alors une forme sensiblement cylindrique, de diamètre correspondant sensiblement au diamètre interne de la chambre 4, soit environ 30 mm et de hauteur H₁ = 17,5 mm.

Ensuite, comme représenté sur la figure 3, on injecte de l'eau sous pression 9 à travers le conduite 5a, pour réaliser la percolation 10 du café au passage de l'eau à travers la dosette micro-perforée ou microporeuse. L'eau est injectée à une pression, traditionnellement, entre 8 et 12 bars dans les orifices du piston 5, puis au travers de la dosette 1a déformée de forme cylindrique. Sous l'effet de pression de l'eau diffusée au travers du piston 5, le café liquide infusé s'écoule 11 ensuite par les orifices du filtre et des orifices 6a du plateau 6, à travers la canule 4₂ vers le récipient à l'extérieur de la machine (non représenté).

A ce stade, la motte de marc de café moulu humidifiée, décompactée et enveloppée, a augmenté de volume, à cause de cette reprise d'humidité, pour obtenir une forme toujours sensiblement cylindrique, de 30 mm de diamètre et environ H₂ = 20 mm de hauteur, soit, par rapport à la forme initiale sphérique, une augmentation de volume d'environ 21,5% (13,98-11,5=2,48 cm³) et une augmentation de la surface de sa section circulaire d'environ 27% (3,13-2,46=0,67 cm²).

Compte-tenu des propriétés de déformation élastique du film présentant un allongement à la rupture supérieur à 30%, l'enveloppe 2 de la dosette n'est pas déchirée ou dégradée par le processus de compactage/percolation. Une déformation élastique de 30% est suffisante pour passer de la forme initiale sphérique à la forme finale cylindrique de plus grand volume, sans rupture de l'enveloppe.

Sur la figure 4, on a représenté la phase finale d'éjection de la motte de marc de café sous enveloppe de forme sphérique 1b, le moyen d'injection étant ici fourni par un actionnement en translation dudit plateau 6 et pivotement d'un élément de paroi latérale 7, de façon à sortir 12 la dosette usagée dans un réservoir de stockage (non représenté).

### Exemple 3 :

On a réalisé des boules sphériques d'agrégats de café moulu compacté, tel que défini dans l'exemple 1, que l'on a recouvertes d'une enveloppe réalisée à partir d'un film de polyéthylène ou de polypropylène perforé, présentant une épaisseur de 200 à 300 µm, avec des micro-perforations de 0,15 à 0,25 mm et une densité de perforation d'environ 100/cm².

Ces enveloppes mises en oeuvre dans un procédé de préparation de café tel que décrit dans l'exemple 2, présentaient des propriétés mécaniques d'allongement à la rupture et de résistance à la rupture conformes à la présente invention.

## Revendications

1. Dosette de café (1) utile notamment pour des machines (3) de préparation et de distribution de boissons à base de café du type comportant au moins une chambre d'extraction (4), et au moins un piston de tassement (5) d'une quantité déterminée de café moulu introduite dans ladite chambre d'extraction, ladite dosette comprenant :
- une quantité déterminée de café moulu compactée sous forme d'un agrégat de grains de café moulu, présentant une forme externe adaptée au roulement, et de préférence une forme de boule sensiblement sphérique, et
- une enveloppe filtrante (2) constituée d'au moins une feuille ou un film perméable, microporeux ou micro perforé emprisonnant et épousant la forme dudit agrégat de café compacté,
**caractérisée en ce que** ladite feuille ou ledit film est flexible, présentant des propriétés d'étirabilité avec un allongement à la rupture d'au moins 30%, avec une force de traction à la rupture inférieure à 2 000 N/m, et une épaisseur d'au moins 150 µm, de préférence de 150 à 500 µm.

2. Dosette selon la revendication 1, **caractérisé en ce que** ladite enveloppe présente un grammage compris entre 20 et 50 g/m².

3. Dosette selon l'une des revendications 1 ou 2, **caractérisée en ce que** ladite enveloppe est constituée d'un matériau non tissé à base de fibres synthétiques enchevêtrées, lesdits micropores de surface présentant une plus grande dimension de 0,15 à 0,30 mm.

4. Dosette selon l'une des revendications 1 ou 2, **caractérisée en ce que** ladite enveloppe est constituée d'un film de matière plastique synthétique microperforé, lesdites microperforations présentant une plus grande dimension de 0,15 à 0,30 mm et ledit film présentant une densité surfacique de perforations de 50 à 250 perforations/cm².

5. Dosette selon l'une des revendications 3 ou 4, **caractérisée en ce que** le ou les matériaux constitutifs de ladite enveloppe sont choisis parmi le polyéthylène, polypropylène, polyester et viscose.

6. Dosette selon les revendications 3 et 5, **caractérisée en ce que** ladite enveloppe est constituée d'un matériau non tissé à base de fibres de polyester revêtues de polyéthylène.

7. Dosette selon la revendication 5, **caractérisée en ce qu'**elle est constituée d'un film de polyéthylène ou polypropylène.

8. Dosette selon l'une des revendications 1 à 7, **caractérisée en ce que** ladite enveloppe comporte deux demi-enveloppes, de préférence symétriques, de préférence encore hémisphériques, scellées l'une à l'autre, de préférence par thermo-soudage, le long d'au moins une ligne de jonction continue et périphérique à la dosette, le matériau constitutif de ladite enveloppe présentant une température de fusion supérieure à 100°C.

9. Dosette selon l'une des revendications 1 à 8, **caractérisée en ce que** ladite quantité de café compactée est de 5 à 15 g, de préférence de 5 à 8 g, et la densité du café moulu compacté constituant ledit agrégat compactée, est de 0,65 à 0,75 kg/dm³, de préférence de 0,68 à 0,72 kg/dm³.

10. Dosette selon l'une des revendications 1 à 9, **caractérisée en ce qu'**elle est de forme sensiblement sphérique, cylindrique ou ovoïde, de préférence sphérique et sa dimension maximale est de 20 à 40 mm, de préférence avec un diamètre de 24 à 34 mm pour une dosette sphérique, de préférence encore de 26 à 30 mm de diamètre de dosette sphérique.

11. Procédé de préparation d'une boisson à base de café à l'aide d'une dosette selon l'une des revendications 1 à 10, dans une machine à café (10) comportant une chambre d'extraction (2) apte à recevoir une dite dosette et au moins un piston de compression (5) et un piston d'éjection (6) d'une dite dosette à l'intérieur de ladite chambre d'extraction (2), **caractérisé en ce que** l'on réalise les étapes successives suivantes, dans lesquelles :
1/ on introduit ladite dosette (1) dans ladite chambre d'extraction (2) d'une machine à café (10), et
2/ on comprime, de préférence à une pression de 500 à 1500 kPa, ladite dosette à l'intérieur de ladite chambre d'extraction à l'aide dudit piston de compression (5), jusqu'à écrasement et déformation de ladite dosette et décompactage dudit agrégat de café moulu compacté, contenu dans ladite enveloppe, et sans rupture de ladite enveloppe, et
3/ on injecte une quantité d'eau déterminée de liquide chaud pressurisée à une pression de 2 à 20 bars (200 KPa à 2 MPa), de préférence de l'eau à la température de 85 à 100°C, de préférence de 86 à 96°C, au travers de ladite dosette décompactée, et
4/ on récupère, dans un récipient approprié, une boisson contenant les arômes de café solubilisé dans ledit liquide chaud, extraits sous pression à travers ladite dosette à l'étape 2/, et
5/ on évacue ladite dosette humide, à l'aide dudit piston d'éjection (6), la motte de marc de café humidifiée résiduelle, de forme différente de ladite dosette initiale et de plus grand volume que ladite dosette initiale, hors de ladite chambre d'extraction (2).

## Patentansprüche

1. Kaffeepad (1), das insbesondere für Maschinen (3) zur Vorbereitung und Ausgabe von Getränken auf Basis von Kaffee des Typs verwendbar ist, der mindestens eine Extraktionskammer (4) und mindestens einen Presskolben (5) für eine bestimmte Menge an gemahlenem Kaffee, der in die Extraktionskammer eingeführt wird, umfasst, wobei das Pad umfasst:
- eine bestimmte Menge an gemahlenem Kaffee, der in Form eines Aggregats von gemahlenen Kaffeebohnen verdichtet ist, das eine äußere Form aufweist, die zum Rollen geeignet ist, und vorzugsweise eine Form einer im Wesentlichen kugelförmigen Kugel, und
- eine Filterhülle (2), die von mindestens einer durchlässigen, mikroporösen oder mikroperforierten Folie oder Haut gebildet ist, die das verdichtete Kaffeeaggregat einschließt und sich an dessen Form anpasst,
**dadurch gekennzeichnet, dass** die Folie oder die Haut flexibel ist, Dehnungseigenschaften mit einer Verlängerung bei Bruch von mindestens 30 % mit einer Zugkraft bei Bruch unter 2000 N/m und eine Dicke von mindestens 150 µm, vorzugsweise von 150 bis 500 µm aufweist.

2. Pad nach Anspruch 1, **dadurch gekennzeichnet, dass** die Hülle ein Grammgewicht zwischen 20 und 50 g/m² aufweist.

3. Pad nach einem der Ansprüche 1 oder 2, **dadurch gekennzeichnet, dass** die Hülle aus einem Faservliesmaterial auf Basis von verflochtenen Synthetikfasern gebildet ist, wobei die Mikroporen an der Oberfläche eine größere Dimension von 0,15 bis 0,30 mm aufweisen.

4. Pad nach einem der Ansprüche 1 oder 2, **dadurch gekennzeichnet, dass** die Hülle von einer mikroperforierten Folie aus synthetischem Kunststoff gebildet ist, wobei die Mikroperforationen eine größere Dimension von 0,15 bis 0,30 mm aufweisen und die Folie eine Oberflächendichte an Perforationen von 50 bis 250 Perforationen/cm² aufweist.

5. Pad nach einem der Ansprüche 3 oder 4, **dadurch gekennzeichnet, dass** das oder die Materialien, aus denen die Hülle besteht, unter Polyäthylen, Polypropylen, Polyester und Viskose ausgewählt ist/sind.

6. Pad nach den Ansprüchen 3 und 5, **dadurch gekennzeichnet, dass** die Hülle von einem Faservliesmaterial auf Basis von Polyesterfasern, die mit Polyäthylen überzogen sind, gebildet ist.

7. Pad nach Anspruch 5, **dadurch gekennzeichnet, dass** es aus einer Folie aus Polyäthylen oder Polypropylen gebildet ist.

8. Pad nach einem der Ansprüche 1 bis 7, **dadurch gekennzeichnet, dass** die Hülle zwei halbe Hüllen, die vorzugsweise symmetrisch, ferner vorzugsweise halbkugelförmig, miteinander vorzugsweise durch Thermoschweißen entlang mindestens einer durchgehenden und am Umfang zum Pad befindlichen Verbindungslinie verschweißt sind, umfasst, wobei das die Hülle bildende Material eine Schmelztemperatur über 100 °C aufweist.

9. Pad nach einem der Ansprüche 1 bis 8, **dadurch gekennzeichnet, dass** die verdichtete Kaffeemenge 5 bis 15 g, vorzugsweise 5 bis 8 g beträgt, und die Dichte des verdichteten gemahlenen Kaffees, der das verdichtete Aggregat bildet, 0,65 bis 0,75 kg/dm³, vorzugsweise 0,68 bis 0,72 kg/dm³ beträgt.

10. Pad nach einem der Ansprüche 1 bis 9, **dadurch gekennzeichnet, dass** es eine im Wesentlichen kugelförmige, zylindrische oder ovale, vorzugsweise kugelförmige Form hat, und seine Maximaldimension 20 bis 40 mm beträgt, vorzugsweise mit einem Durchmesser von 24 bis 34 mm bei einem kugelförmigen Pad, weiter bevorzugt mit einem Durchmesser von 26 bis 30 mm bei einem kugelförmigen Pad.

11. Verfahren zur Vorbereitung eins Getränks auf Basis von Kaffee mit Hilfe eines Pads nach einem der Ansprüche 1 bis 10 in einer Kaffeemaschine (10), die eine Extraktionskammer (2), die ein derartiges Pad aufnehmen kann, und mindestens einen Presskolben (5) und einen Auswurfkolben (6) für ein derartiges Pad im Inneren der Extraktionskammer (2) umfasst, **dadurch gekennzeichnet, dass** die folgenden aufeinanderfolgenden Schritte durchgeführt werden, bei denen:
1/ das Pad (1) in die Extraktionskammer (2) einer Kaffeemaschine (10) eingeführt wird und
2/ vorzugsweise bei einem Druck von 500 bis 1500 kPa das Pad innerhalb der Extraktionskammer mit Hilfe des Presskolbens (5) komprimiert wird, bis das Pad zerdrückt und verformt und das Aggregat an verdichtetem gemahlenem Kaffee, das in der Hülle enthalten ist, ohne Bruch der Hülle gelockert ist, und
3/ eine bestimmte Menge an heißer Flüssigkeit unter Druck mit einem Druck von 2 bis 20 bar (200 KPa bis 2 MPa), vorzugsweise von Wasser mit einer Temperatur von 85 bis 100 °C, vorzugsweise von 86 bis 96 °C, durch das gelockerte Pad eingespritzt wird, und
4/ in einem geeigneten Behälter ein Getränk gewonnen wird, das die Aromen von in der heißen Flüssigkeit gelöstem Kaffee enthält, die unter Druck durch das Pad in Schritt 2/ extrahiert wurden, und
5/ das feuchte Pad mit Hilfe des Auswurfkolbens (6), der Klumpen an Kaffeesatz mit einer Restfeuchtigkeit von unterschiedlicher Form als das ursprüngliche Pad und von größerem Volumen als das ursprüngliche Pad aus der Extraktionskammer (2) beseitigt wird.

## Claims

1. A coffee pod (1) which can be used in particular in machines (3) for preparing and dispensing coffee beverages of the type comprising at least one extraction chamber (4) and at least one tamping piston (5) to tamp a determined quantity of ground coffee inserted in said extraction chamber, said pod comprising:
- a determined quantity of compacted ground coffee in the form of an aggregate of ground coffee beans, having an outer shape adapted for rolling and preferably of substantially spherical ball shape, and
- a filtering casing (2) formed of at least one permeable, microporous or micro-perforated sheet or film trapping and following the shaped contour of said aggregate of compacted coffee,
**characterized in that** said sheet or said film is flexible having stretch properties with an ultimate elongation of at least 30%, an ultimate tensile strength of less than 2,000 N/m and a thickness of at least 150 µm, preferably from 150 to 500 µm.

2. The pod according to claim 1, **characterized in that** said casing has a gram weight of between 20 and 50 g/m².

3. The pod according to one of claims 1 or 2, **characterized in that** said casing is formed of a nonwoven material of intermingled synthetic fibres, the largest size of said surface micropores being 0.15 to 0.30 mm.

4. The pod according to one of claims 1 or 2, **characterized in that** said casing is formed of a film of microperforated synthetic plastic material, the largest size of said microperforations being 0.15 to 0.30 mm, and said film having a surface density of perforations of 50 to 250 perforations/cm².

5. The pod according to one of claims 3 or 4, **characterized in that** the constituent material(s) of said casing are chosen from among polyethylene, polypropylene, polyester and viscose.

6. The pod according to claims 3 and 5, **characterized in that** said casing is formed of a nonwoven material of polyester fibres coated with polyethylene.

7. The pod according to claim 5, **characterized in that** it is formed of a film of polyethylene or polypropylene.

8. The pod according to one of claims 1 to 7 **characterized in that** said casing comprises two semi-casings preferably symmetrical, further preferably semi-spherical, sealed onto each other preferably by heat welding along at least one continuous junction line peripheral to the pod, the constituent material of said casing having a melt temperature higher than 100°C.

9. The pod according to one of claims 1 to 8, **characterized in that** said quantity of compacted coffee is 5 to 15 g, preferably 5 to 8 g, and the density of the compacted ground coffee forming said compacted aggregate is 0.65 to 0.75 kg/dm³, preferably 0.68 to 0.72 kg/dm³.

10. The pod according to one of claims 1 to 9, **characterized in that** it is of substantially spherical, cylindrical or ovoid shape, preferably spherical, and its maximum size is 20 to 40 mm, preferably with a diameter of 24 to 34 mm for a spherical pod, further preferably a diameter of 26 to 30 mm for a spherical pod.

11. A method for preparing a coffee beverage using a pod according to one of claims 1 to 10, in a coffee machine (10) comprising an extraction chamber (2) capable of receiving a said pod and at least one compression piston (5) and one ejection piston (6) for said pod to inside said extraction chamber (2), **characterized in that** the following successive steps are performed:
1/ said pod (1) is inserted into said extraction chamber (2) of a coffee machine (10), and
2/ said pod is compressed preferably at a pressure of 500 to 1,500 kPa inside said extraction chamber by means of said compression piston (5) until said pod is crushed and deformed and said aggregate of compacted ground coffee contained in said casing is de-compacted, without rupture of said casing, and
3/ a determined quantity of water, hot liquid pressurized to a pressure of 2 to 20 bars (200 KPa to 2 MPa), preferably water at a temperature of 85 to 100°C, preferably 86 to 96°C is injected through said de-compacted pod, and
4/ a beverage is collected, in a suitable recipient, containing the aromas of the coffee solubilised in said hot liquid, extracted under pressure through said pod at step 2/, and
5/ said wet pod, the block of residual wet coffee grinds having a different shape from that of said initial pod and of larger volume than said initial pod, is evacuated by means of said ejection piston (6) to outside said extraction chamber (2).
